# EUROPEAN PATENT APPLICATION

(11) **EP 2 505 733 A1**
(43) Date of publication of application: **03.10.2012**
(21) Application number: 09851499.5
(22) Date of filing: 23.11.2009
(51) Int. Cl.: E04D 11/02, B32B 15/14, A01G 9/02

(54) **ROOF-GREENING SHEET**

(71) Applicant: Renew System Co. Ltd, Seoul 121-835 (KR)
(72) Inventor: LEE, Sang Keun, Namyangju-si Gyeonggi-do 472-872 (KR); LEE, Jong Yong, Seoul 120-012 (KR); CHO, Il Kyu, Yeoju-gun Gyeonggi-do 469-856 (KR)
(74) Representative: Adam, Holger
(86) International application number: PCT/KR2009/006894
(87) International publication number: WO 2011/062314

(57) **Abstract**

Disclosed therein is a sheet for green roof that includes a copper or aluminum thin film or a nonwoven fabric having a predetermined thickness firmly laminated on both sides of a glass fabric having a predetermined area through an adhesive to prevent the root growth of plants and maximizes insulation from moisture, thermal insulation, and reduction of thermal conductivity, thereby extending the lifetimes of the sheet, the waterproof layer and the building structure.

## Description

### TECHNICAL FIELD

The present invention relates to a sheet installed not only to prevent the root growth of plants but also to provide a waterproof seal when vegetating a building roof, and more particularly, to a sheet for green roof including copper or aluminum thin films or nonwoven fabrics firmly laminated on both sides of a glass fabric using an adhesive to eliminate moisture and maximize thermal insulation in vegetating a building roof.

### BACKGROUND ART

As well known, green roofs involve growing plants on rooftops for providing a vegetation environment in an urban area to minimize air pollutions and provide the urban area with beautiful views. To make the green roofs safe and stable, it is required to establish a "safe foundation" on the building structure where the green roofs are provided (that is, "planted"), as designed so that the vegetation does not affect the structural stability and durability of the building.

The establishment of a safe foundation includes forming a waterproof layer, which is the most fundamental base constructed on the rooftop of the building, and providing a root barrier material for protection of the waterproof layer against the green roof portion (e.g., plants, water, soil, manure, etc.). The primary reason of establishing the root barrier material is the growth control of the plant roots in vegetating the top of a building structure, where the roots may grow vigorously penetrating into the waterproof layer and into the building structure that is made up of concrete, ending up with reduced lifetime of the building structure.

To overcome this problem, a recent approach has been developed to form a root barrier layer prior to construction of green roofs. For example, a roof barrier method involves providing a nonwoven fabric overlying the top of a drainage plate to keep the drainage plate from being in direct contact with the waterproof layer. The nonwoven fabric is a regular polyester nonwoven fabric or a performance-improved polymer nonwoven fabric applied on the drainage plate, only keeping the roots of plants from penetrating into the water-storage space of the drainage plate without deterioration of the drainage function of the drainage plate, thereby only controlling the root growth of the plants. The plant roots tend to penetrate into fine gaps and create a water path. But the nonwoven fabric takes on a form susceptible to penetration of the growing roots and thus cannot provide a good root barrier function.

For protection of the waterproof layer from penetration of plant roots, a PE film with stable chemical and physical properties may be adhesively applied on the top of the waterproof layer to form a root barrier layer for keeping the plant roots from growing into the waterproof layer. The PE film has a joint portion to which an adhesive or an adhesive tape is applied, so the joint portion becomes a main weak point ready to form a water path because of its poor adhesion stability, allowing the penetration of plant roots and thus causing a deterioration of the root barrier function.

### DISCLOSURE OF INVENTION

### TECHNICAL PROBLEM

Accordingly, the present invention has been made to solve the above-mentioned problems occurring in the prior arts, and it is an object of the present invention to provide a sheet for green roof that includes a copper or aluminum thin film or a nonwoven fabric having a predetermined thickness firmly laminated on both sides of a glass fabric having a predetermined area through an adhesive to prevent the root growth of plants and maximizes a moisture barrier function, thermal insulation and reduction of thermal conductivity, thereby extending the lifetimes of the sheet, the waterproof layer and the building structure.

### TECHNICAL SOLUTION

To accomplish the above object, according to the present invention, there is provided a sheet for green roof which is installed on the top of a waterproof layer to prevent the root growth of plants in vegetation of a green roof, the sheet for green roof including a glass fabric having a predetermined thickness and a predetermined area, and a copper film having the same area of the glass fabric and being integrally laminated on both sides of the glass fabric using pressure.

In another aspect of the present invention, a copper film having the same area of the glass fabric is laminated on the one side of the glass fabric, and an aluminum thin film having the same area of the glass fabric is laminated on the other side of the glass fabric using pressure.

In still another aspect of the present invention, a copper film having the same area of the glass fabric is laminated on the one side of the glass fabric, and a nonwoven fabric having the same area of the glass fabric is integrally laminated on the other side of the glass fabric using pressure.

### ADVANTAGEOUS EFFECTS

As described above, the sheet for green roof according to the present invention that has a firm dual-composite laminate of a copper film and an aluminum thin film or a nonwoven fabric prevents the root growth of plants during vegetation of the green roofs, removes the moisture, minimizes thermal conductivity, enhances thermal insulation, increases the lifetimes of the sheet and the building structure, increases the economy efficiency and workability to shorten the required construction time, and reduces the maintenance cost.

### BRIEF DESCRIPTION OF THE DRAWINGS

FIG. 1 is a schematic exploded perspective of a first embodiment of the present invention.

FIG. 2 is an enlarged cross-section showing the first embodiment of the present invention.

FIG. 3 is an enlarged cross-section showing a second embodiment of the present invention.

FIG. 4 is an enlarged cross-section showing a third embodiment of the present invention.

FIG. 5 is an enlarged cross-section showing a fourth embodiment of the present invention.

FIG. 6 is an enlarged cross-section showing a fifth embodiment of the present invention.

FIG. 7 is an enlarged cross-section showing a sixth embodiment of the present invention.
10: glass fabric, 20: copper film, 30: aluminum thin film
40: nonwoven fabric, 50: PVC sheet, 100: sheet

### BEST MODE FOR CARRYING OUT THE INVENTION

According to the feature of the present invention, in a sheet for green roof which is installed on the top of a waterproof layer to prevent the root growth of plants in vegetation of a green roof, the sheet for green roof includes a glass fabric having a predetermined thickness and a predetermined area, and a copper film having the same area of the glass fabric and being integrally laminated on both sides of the glass fabric using pressure.

Reference will be now made in detail to the preferred embodiment of the present invention with reference to the attached drawings.

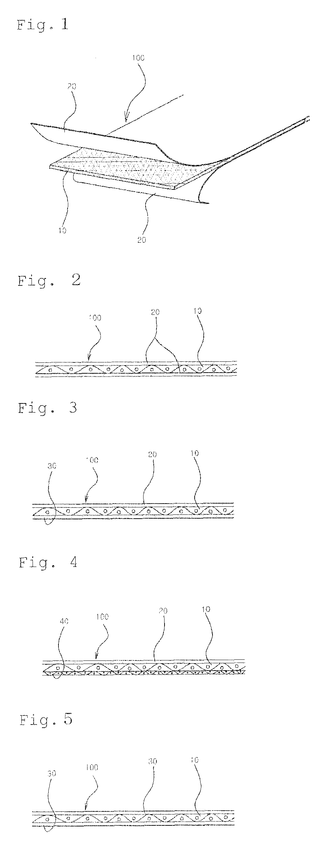

FIG. 1 is a schematic exploded perspective of a first embodiment of the present invention; and FIGS. 2 to 7 are enlarged cross-sections showing the first to sixth embodiments of the present invention, respectively.

As illustrated in the figures, a sheet 100 for green roof according to the present invention comprises a glass fabric 10, a copper film 20, an aluminum thin film 30, a nonwoven fabric 40, and a PVC sheet 50.

The glass fabric 10, which features high-temperature durability, non-corrosiveness pertaining to resistance to chemicals, high tensile strength, good thermal insulation, and low thermal conductivity, is positioned at the center of the sheet 100 and provided as a core material having a predetermined area and a predetermined thickness. The copper film 20 is made from copper as a principal component into a thin film by rolling and provided in a predetermined area and a predetermined thickness to make the copper component suppress the growth point of the primary root, inhibiting the vertical growth of lateral roots. This secures the root barrier function and contributes to the stability against the growth of plants.

The aluminum thin film 30 is made from industrial aluminum into a thin film by rolling. Due to its excellence in heat conservation and insulation, the aluminum thin film 30 is inserted into the ceiling or walls of a building for the purpose of thermal insulation, or laminated on a sheet as a means for reflecting light and heat. Hence, the aluminum thin film 30 is provided in a predetermined area and a predetermined thickness to prevent a heat loss of the building structure.

The nonwoven fabric 40 is not made by weaving fibers but by arranging fibers in parallel or at random and then bonding them together with a synthetic resin adhesive into a felt structure. The nonwoven fabric is made from a polypropylene (PP) or polyethylene (PE) resin and provided in a predetermined area and a predetermined thickness.

The PVC (also called "polyvinyl chloride resin") sheet 50 is made from a homopolymer of vinyl chloride, or a copolymer containing at least 50 % vinyl chloride, and provided in a predetermined area and a predetermined thickness for the multipurpose as a root barrier and waterproof seal to protect the copper film 20 and provide a waterproofing function.

In a method of forming the sheet 100 using the aforementioned materials, as shown in FIGS. 1 and 2, an adhesive is applied on both sides of the glass fabric 10 having a predetermined thickness and a predetermined area, and then the copper film 20 having the same area of the glass fabric 10 is firmly laminated on both sides of the glass fabric 10 using pressure to complete the three-layered sheet 100 for green root, which provides resistance to external shocks and hence a root barrier function.

In another aspect, as shown in FIG. 3, an adhesive is applied on both sides of the glass fabric 10 having a predetermined thickness and a predetermined area, and then the copper film 20 having the same area of the glass fabric 10 is laminated on the one side of the glass fabric 10 using pressure, while the aluminum thin film 30 having the same area of the glass fabric 10 is integrally laminated on the other side of the glass fabric 10 using pressure. The sheet 100 thus completed provides a root barrier function, reduces heat conductivity, and enhances thermal insulation.

In still another aspect, as shown in FIG. 4, an adhesive is applied on both sides of the glass fabric 10 having a predetermined thickness and a predetermined area, and then the copper film 20 having the same area of the glass fabric 10 is laminated on the one side of the glass fabric 10 using pressure, while the nonwoven fabric 40 having the same area of the glass fabric 10 is integrally laminated on the other side of the glass fabric 10 using pressure. The sheet 100 thus completed provides a root barrier function and eliminates moisture.

In still another aspect, as shown in FIG. 5, an adhesive is applied on both sides of the glass fabric 10 having a predetermined thickness and a predetermined area, and then the aluminum thin film 30 having the same area of the glass fabric 10 is firmly laminated on both sides of the glass fabric 10 using pressure. The sheet 100 thus completed is excellent in thermal insulation.

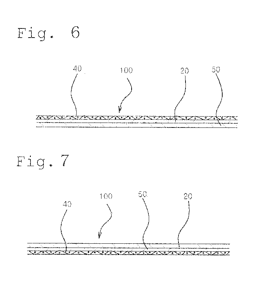

In still another aspect, as shown in FIG. 6, an adhesive is applied on both sides of the copper film 20 having a predetermined thickness and a predetermined area, and then the nonwoven fabric 40 having the same area of the copper film 20 is laminated on the one side of the copper film 20 using pressure, while the PVC sheet 50 having the same area of the copper film 20 is integrally laminated on the other side of the copper film 20 using pressure. The sheet 100 thus completed provides a root barrier function and eliminates moisture.

In still further another aspect, as shown in FIG. 7, an adhesive is applied on both sides of the PVC sheet 50 having a predetermined thickness and a predetermined area, and then the copper film 20 having the same area of the PVC sheet 50 is laminated on the one side of the PVC sheet 50 using pressure, while the nonwoven fabric 40 having the same area of the PVC sheet 50 is integrally laminated on the other side of the PVC sheet 50 using pressure. The sheet 100 thus completed provides a root barrier function and eliminates moisture.

To construct green roofs using the sheet 100, a water repellent with good adhesiveness is applied in a predetermined thickness on the top of the waterproof layer of the green roof, and then a plurality of sheets 100 cut out in a predetermined area are firmly bonded to the coating of the water repellent, where the consecutive connections between the sheets are combined together using a copper tape. Then, a soil layer is provided on the top of the sheets 100, and a variety of plants such as trees or flowering plants are set into the soil layer to vegetate the green roofs.

### INDUSTRIAL APPLICABILITY

The sheet for green roof according to the present invention that includes a dual laminate structure of a copper film, an aluminum thin film, or a nonwoven fabric can prevent the root growth of plants in vegetation of green roofs, eliminate moisture, minimize thermal conductivity, and enhance thermal insulation to extend the lifetimes of the sheet and the building structure, with enhanced economy efficiency and workability, and reduce the construction time and the maintenance cost, which secures the high industrial availability of the present invention.

## Claims

1. A sheet for green roof, which is installed on the top of a waterproof layer to prevent the root growth of plants in vegetation of a green roof, the sheet for green roof comprising:
a glass fabric 10 having a predetermined thickness and a predetermined area and being coated with an adhesive on both sides thereof; and
a copper film 20 having the same area of the glass fabric and being integrally laminated on both sides of the glass fabric 10 using pressure.

2. The sheet for green roof as claimed in claim 1, wherein the copper film 20 of the same area of the glass fabric is laminated on the one side of the glass fabric 10, with an aluminum thin film 30 of the same area of the glass fabric 10 being integrally laminated on the other side of the glass fabric 10 using pressure.

3. The sheet for green roof as claimed in claim 1, wherein the copper film 20 of the same area of the glass fabric is laminated on the one side of the glass fabric 10, with a nonwoven fabric 40 of the same area of the glass fabric 10 being integrally laminated on the other side of the glass fabric 10 using pressure.

4. The sheet for green roof as claimed in claim 1, wherein the glass fabric 10 is coated with an adhesive on both sides thereof, with an aluminum thin film 30 of the same area of the glass fabric 10 being firmly laminated on both sides of the glass fabric 10 using pressure.

5. The sheet for green roof as claimed in claim 1 or 2, wherein the copper film 20 is coated with an adhesive on both sides thereof, with a nonwoven fabric 40 and a PVC sheet 50 of the same area of the copper film being firmly laminated on both sides of the copper film 20 using pressure.

6. The sheet for green roof as claimed in claim 5, wherein the PVC sheet 50 is coated with an adhesive on both sides thereof, with the copper film 20 and the nonwoven fabric 40 of the same area of the PVC sheet being laminated on both sides of the PVC sheet 50 using pressure.

## Amended claims

### Amended claims under Art. 19.1 PCT

**1.** A sheet for green roof, which is installed on the top of a waterproof layer to prevent the root growth of plants in vegetation of a green roof, the sheet for green roof comprising:
a glass fabric 10 having a predetermined thickness and a predetermined area and being coated with an adhesive on both sides thereof; and
a copper film 20 having the same area of the glass fabric and being integrally laminated on both sides of the glass fabric 10 using pressure.

**2.** A sheet for green roof, which is installed on the top of a waterproof layer to prevent the root growth of plants in vegetation of a green roof, the sheet for green roof comprising:
a glass fabric 10;
a copper film 20 having the same area of the glass fabric and being laminated on the one side of the glass fabric 10; and
an aluminum thin film 30 having the same area of the glass fabric 10 and being integrally laminated on the other side of the glass fabric 10 using pressure.

**3.** A sheet for green roof, which is installed on the top of a waterproof layer to prevent the root growth of plants in vegetation of a green roof, the sheet for green roof comprising:
a glass fabric 10;
a copper film 20 having the same area of the glass fabric and being laminated on the one side of the glass fabric 10; and
a nonwoven fabric 40 having the same area of the glass fabric 10 and being integrally laminated on the other side of the glass fabric 10 using pressure.

**4.** A sheet for green roof, which is installed on the top of a waterproof layer to prevent the root growth of plants in vegetation of a green roof, the sheet for green roof comprising:
a glass fabric 10 being coated with an adhesive on both sides thereof; and
an aluminum thin film 30 having the same area of the glass fabric 10 and being firmly laminated on both sides of the glass fabric 10 using pressure.

**5.** A sheet for green roof, which is installed on the top of a waterproof layer to prevent the root growth of plants in vegetation of a green roof, the sheet for green roof comprising:
a copper film 20 being coated with an adhesive on both sides thereof; and
a nonwoven fabric 40 and a PVC sheet 50 having the same area of the copper film and being firmly laminated on both sides of the copper film 20 using pressure.

**6.** A sheet for green roof, which is installed on the top of a waterproof layer to prevent the root growth of plants in vegetation of a green roof, the sheet for green roof comprising:
a PVC sheet being coated with an adhesive on both sides thereof; and
a copper film 20 and a nonwoven fabric 40 having the same area of the PVC sheet and being laminated on both sides of the PVC sheet using pressure.

Claim 1: No change

Claim 2: The claim 2 of the original specification that refers to the claim 1 is revised into an independent claim because it does not coincide in features with the claim 1.

Claim 3: The claim 3 of the original specification that refers to the claim 1 is revised into an independent claim because it does not coincide in features with the claim 1.

Claim 4: The claim 4 of the original specification that refers to the claim 1 is revised into an independent claim because it does not coincide in features with the claim 1.

Claim 5: The claim 5 of the original specification that refers to the claim 1 or 2 is revised into an independent claim because it does not coincide in features with the claim 1.

Claim 6: The claim 6 of the original specification that refers to the claim 5 is revised into an independent claim because it does not coincide in features with the claim 5.
